# EUROPÄISCHE PATENTSCHRIFT

(11) **EP 2 247 869 B1**
(45) Veröffentlichungstag und Bekanntmachung des Hinweises auf die Patenterteilung: **30.01.2013**
(21) Anmeldenummer: 09713799.6
(22) Anmeldetag: 20.02.2009
(51) Int. Cl.: F16D 66/02

(54) **VORRICHTUNG ZUR ÜBERWACHUNG DER BELAGDICKE EINES BREMSBELAGS EINER REIBUNGSBREMSE EINES FAHRZEUGS**
DEVICE FOR MONITORING THE LINING THICKNESS OF A BRAKE LINING OF A FRICTION BRAKE OF A VEHICLE
DISPOSITIF DE SURVEILLANCE DE L'ÉPAISSEUR DE REVÊTEMENT D'UNE GARNITURE DE FREIN D'UN FREIN À FRICTION D'UN VÉHICULE

(30) Priorität: 27.02.2008 DE 102008011288
(43) Veröffentlichungstag der Anmeldung: 10.11.2010
(73) Patentinhaber: KNORR-BREMSE Systeme für Schienenfahrzeuge GmbH, 80809 München (DE)
(72) Erfinder: ELSTORPFF, Marc-Gregory, 80638 München (DE)
(74) Vertreter: Mattusch, Gundula
(86) Internationale Anmeldenummer: PCT/EP2009/001255
(87) Internationale Veröffentlichungsnummer: WO 2009/106274

(56) Entgegenhaltungen:
- JP-A- 2004 205 437
- US-A1- 2002 116 992
- US-A1- 2006 273 148

## Beschreibung

Die Erfindung betrifft eine Vorrichtung zur Überwachung der Belagdicke eines Bremsbelags einer Reibungsbremse eines Fahrzeugs, wobei der Bremsbelag mit einer Bremsscheibe zusammenwirkt, gemäß dem Oberbegriff von Anspruch 1.

Eine solche Vorrichtung ist beispielsweise in der DE 100 29 238 A1 beschrieben. Dort wird zur Sensierung des Verschleißzustands der Bremse entweder ein im Bremsbelag integrierter, elektrisch leitender Schleifkontakt verwendet oder alternativ ein Verschleißsensor mit innenliegenden Schleifkontakten separat im oder am Bremsbelag angebracht. Bei einem kritischen Verschleißmaß des Bremsbelags bzw. bei Freilegen des Verschleißsensors kommt beispielsweise eine elektrisch leitende Kontaktstelle mit der Bremsscheibe in Berührung, wodurch ein elektrischer Kurzschluss hervorgerufen wird, oder es wird eine elektrische Kontaktschleife unterbrochen, d.h. es erfolgt eine Unterbrechung eines von außen aufgeprägten elektrischen Stromflusses. Hierzu ist jedoch eine Stromversorgung der Verschleißsensoren über das Fahrzeug notwendig. Bei Fahrzeugen wie beispielsweise Güterwagons, welche über keine eigene Stromversorgung verfügen, ist ein solcher Ansatz jedoch nicht zielführend.

Eine gattungsgemäße Vorrichtung ist im Stand der Technik beispielsweise in der US 2006/273148 A1 beschrieben. Dort sind jeweils passive Transponder in Bremsbeläge eingebettet, welche durch direkten Kontakt mit einer Bremsscheibe verändert oder zerstört werden. Jedoch erfordert die Einbettung von Transpondern in Bremsbeläge einen gewissen Herstellaufwand. Gemäß JP 2004 205437 A sowie US 2002/116992 A1 sind passive Transponder in eine Lauffläche eines Reifens eingebettet, wobei bei Abnutzung des Reifens bis auf die Einbettungstiefe die Transponder durch Kontakt mit der Straße verändert oder zerstört werden.

### Aufgabe der Erfindung

Die Aufgabe der Erfindung besteht demgegenüber darin, eine Vorrichtung der eingangs erwähnten Art derart weiterzubilden, dass sie einfacher und kostengünstiger herstellbar ist. Weiterhin soll ein Verfahren zur Anwendung der Vorrichtung angegeben werden.

Diese Aufgabe wird gemäß der Erfindung durch die Merkmale von Anspruch 1 und Anspruch 7 gelöst.

### Offenbarung der Erfindung

Anspruch 1 basiert auf dem Gedanken, dass der hinsichtlich seines Verschleißzustands oder Verschleißmaßes zu überwachende Bremsbelag mit wenigstens einem passiven Transponder eines RFID-Systems versehen wird.

Dabei ist der passive Transponder am Bremsbelag an einer Außenfläche angebracht. Insbesondere ist der passive Transponder am Bremsbelag derart angebracht, dass er in mechanischen Kontakt mit einem von der Bremsscheibe geführten Element treten kann.

Dieser passive Transponder wird bei Erreichen wenigstens einer definierten Verschleißgrenze des Bremsbelags durch Kontakt mit dem von der Bremsscheibe geführten Element derart verändert, beschädigt oder zerstört, dass er nach Beleuchtung durch ein Lesegerät des RFID-Systems ein gegenüber einem erwarteten Signal verändertes Signal oder kein Signal an das Lesegerät sendet.

Ein passiver Transponder eines Radio Frequency-Identifikation-Systems (RFID) benötigt zur Funktionsausübung bekanntlich keine eigene Stromversorgung. Vielmehr erzeugt das Lesegerät des RFID-Systems ein hochfrequentes elektromagnetisches Wechselfeld, welches die Antenne des RFID-Transponders beleuchtet. In einer Antennenspule des Transponders entsteht, sobald diese vom elektromagnetischen Feld des Lesegeräts erfasst wird, ein Induktionsstrom. Dieser Induktionsstrom wird gleichgerichtet und damit ein Kondensator als Kurzzeitspeicher aufgeladen, welcher für den Lesevorgang die Stromversorgung eines Mikrochips übernimmt. Der so aktivierte Mikrochip im Transponder empfängt Befehle vom Lesegerät, welches dieses in sein elektromagnetisches Feld moduliert. Der Mikrochip erzeugt eine Antwort und moduliert durch Feldschwächung im kontaktfreien Kurzschluss oder per Reflexion das vom Lesegerät ausgesendete Feld.

Ein solcher Transponder besteht aus folglich aus einem Mikrochip, einer Antenne, einem Träger oder Gehäuse und einer Energiequelle, welche bei passiven Transpondern durch einen Kondensator gebildet wird. Passive Transponder beziehen folglich ihre Energie zur Versorgung des Mikrochips aus den empfangenen elektromagnetischen Wellen (Continuous Wave) des Lesegeräts. Mit der Antennenspule wird durch die Induktion ähnlich wie in einem Transformator der Kondensator aufgeladen, welcher den Mikrochip mit elektrischer Energie versorgt. Die Continuous Wave muss aufgrund der geringen Kapazität des Kondensators vom Lesegerät durchgehend gesendet werden, während sich der Transponder im Lese- oder Beleuchtungsbereich befindet.

Falls daher das zulässige Verschleißmaß des Bremsbelags erreicht ist, gelangt das mit der Bremsscheibe mitgeführte Element in mechanischen Kontakt mit dem am Bremsbelag angebrachten passiven Transponder, wodurch dieser entweder in seiner Funktion verändert, beschädigt oder vollständig zerstört wird.

Im ersten Falle, also wenn der passive Transponder noch funktionsfähig ist, ist das von ihm rückgekoppelte Signal gegenüber einem im unversehrten oder unberührten Zustand generierten Signal verändert. Im zweiten Fall kann der Transponder aufgrund seiner Zerstörung überhaupt kein Signal mehr in das Lesegerät rückkoppeln. Wenn hingegen das zulässige Verschleißmaß des Bremsbelags noch nicht erreicht ist und der passive Transponder daher noch nicht in Kontakt mit dem von der Bremsscheibe geführten Element getreten ist, hat er das von ihm erwartete Signalverhalten noch nicht geändert.

Folglich kann die Beurteilung, ob ein definiertes zulässiges Verschleißmaß eines mit einem solchen passiven Transponder ausgerüsteten Bremsbelags erreicht ist oder nicht abhängig von dem von diesem Transponder in das Lesegerät rückgekoppelten Signal erfolgen.

Der besondere Vorteil der Erfindung liegt darin, dass solche passiven Transponder, wie oben bereist beschrieben, ihre Energie vom Lesegerät beziehen und daher das hinsichtlich des Verschleißmaßes seiner Bremsen zu überwachende Fahrzeug über keine Stromversorgung zu verfügen braucht. Eine bevorzugte Anwendung betrifft daher Schienenfahrzeuge, insbesondere Güterwagons ohne eigene Stromversorgung. Selbstverständlich können aber auch elektrifizierte Fahrzeuge oder Straßenfahrzeuge wie Nutzfahrzeuge oder Personenkraftwagen mit einer erfindungsgemäßen Vorrichtung ausgerüstet werden.

Weiterhin müssen am oder in dem Bremsbelag auch keine weiteren Verkabelungen zur Datenübertragung bzw. Stromversorgung vorgesehen werden, was die Fertigung solcher Bremsbeläge sehr kostengünstig macht. Weiterhin stellen solche einfachen passiven Transponder sehr günstige elektronische Baueinheiten dar.

Nicht zuletzt wird gegenüber den Verschleiß kontinuierlich messenden Systemen ein eindeutig definiertes Signal erzeugt, wodurch die Tendenz zu Auswertungsfehlern gering ist.

Durch die in den Unteransprüchen aufgeführten Maßnahmen sind vorteilhafte Weiterbildungen und Verbesserungen der im Anspruch 1 angegebenen Erfindung möglich.

Gemäß einer Weiterbildung wirkt das Lesegerät mit einer Auswerteeinrichtung zusammen, welche eine Verschleißinformation über den Verschleißzustand des Bremsbelags abhängig von dem von dem Transponder in das Lesegerät rückgekoppelten oder nicht rückgekoppelten Signal generiert.

Weiterhin kann eine mit der Auswerteeinrichtung zusammen wirkende Anzeigeeinrichtung zur Anzeige der Verschleißinformation über den Verschleißzustand des Bremsbelags vorgesehen sein.

Genaueres geht aus der nachfolgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt die einzige Figur eine Vorrichtung zur Überwachung der Belagdicke eines Bremsbelags einer Reibungsbremse eines Fahrzeugs gemäß einer bevorzugten Ausführungsform der Erfindung.

### Beschreibung des Ausführungsbeispiels

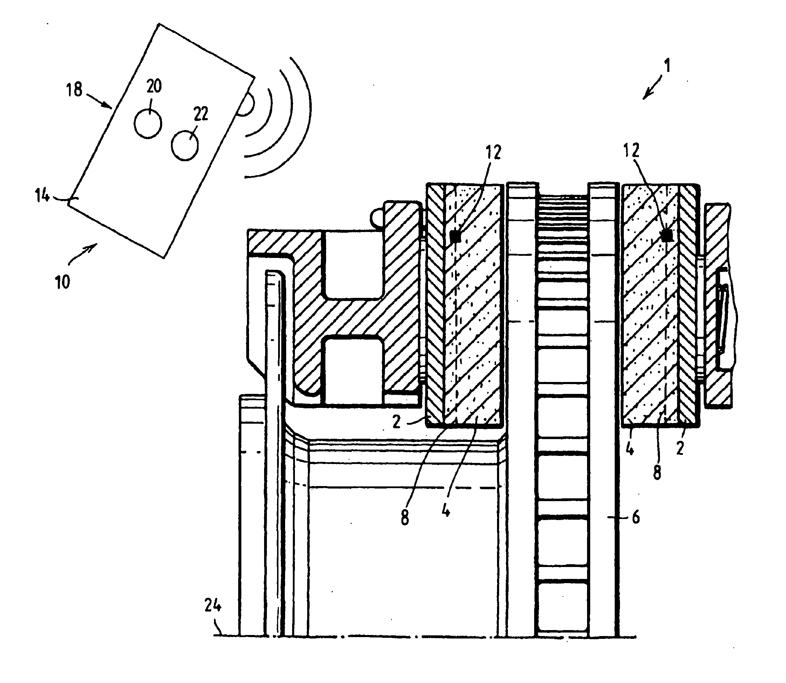

In Fig.1 ist eine Reibungsbremse 1 eines Schienenfahrzeugs, insbesondere eines Güterwagons, bevorzugt in Form einer Scheibenbremse gezeigt, mit einer Bremsscheibe 6, die zwei von Bremsbelagträgern 2 getragenen Bremsbelägen 4 zwischengeordnet ist. Zum Zuspannen der Reibungsbremse 1 werden die Bremsbeläge 4 durch einen hier nicht interessierenden Bremsmechanismus in Reibungseingriff mit der Bremsscheibe 6 gebracht. Nach einiger Zeit der Bremsennutzung verschleißen sowohl die Bremsscheibe 6 als auch die Bremsbeläge 4, indem die Belagdicke oder Belagstärke abnimmt. Zur Vermeidung von direktem Reibkontakt der Bremsbelagträger 2 mit der Bremsscheibe 6 dürfen sich die Bremsbeläge 4 nur bis maximal auf ein vorgegebenes zulässiges Verschleißmaß 8 abnutzen, das in Fig.1 jeweils durch eine gestrichelte Linie symbolisiert ist.

Zur Überwachung, ob die Bremsbeläge 4 das zulässige Verschleißmaß 8 schon erreicht haben oder nicht, ist in Fig.1 eine Vorrichtung 10 zur Überwachung der Belagdicke der Bremsbeläge 4 in bevorzugter Ausführungsform gezeigt.

Die Bremsbeläge 4 sind jeweils mit einem passiven Transponder 12 eines RFID-Systems versehen, wobei diese passiven Transponder 12 bei Erreichen des zulässigen Verschleißmaßes 8 der Bremsbeläge 4 durch Kontakt mit der Bremsscheibe 6 derart verändert, beschädigt oder zerstört werden, dass sie nach Beleuchtung durch ein Lesegerät 14 des RFID-Systems ein gegenüber ein gegenüber einem erwarteten Signal verändertes Signal oder kein Signal an das Lesegerät 14 senden. Dazu sind die passiven Transponder 12 bevorzugt in einer Ebene parallel zu einer der Bremsscheibe 6 zugewandten Eingriffsfläche der Bremsbeläge 4 angeordnet, in der das durch die gestrichelte Linie in Fig.1 gekennzeichnete zulässigen Verschleißmaß 8 liegt. Dies bewirkt, dass wenn sich die Bremsbeläge 4 auf dieses Verschleißmaß 8 abgenutzt haben, der jeweils betroffene passive Transponder 12 durch den Reibkontakt mit der Bremsscheibe 6 entweder so beschädigt wird, dass er zwar noch ein Signal in das Lesegerät 14 rückkoppeln kann, dieses Signal jedoch von einem erwarteten Signal, welches ein funktionsfähiger und unbeschädigter Transponder 12 aussenden würde, abweicht. Alternativ könnte ein Transponder 12 durch Reibungskontakt mit der Bremsscheibe 6 aus dem Bremsbelag 4 ausbrechen und damit vom Bremsbelag 4 abfallen oder vollständig zerstört werden, so dass er nach Beleuchtung des betreffenden Bremsbalgs 4 durch das Lesegerät 14 kein Signal mehr rückkoppeln kann.

Folglich erfolgt die Beurteilung, ob das zulässige Verschleißmaß 8 der mit solchen passiven Transponder 12 ausgerüsteten Bremsbeläge 4 erreicht ist oder nicht, abhängig von dem von dem jeweiligen Transponder 12 in das Lesegerät 14 rückgekoppelten Signal. Dabei kann es vorkommen, dass sich die Bremsbeläge 4 nicht gleichmäßig abnutzen und das Signal des dem einen Bremsbelag 4 zugeordneten Transponders 12 wegen bereits vorhandenem Kontakt mit der Bremsscheibe 6 gegenüber dem erwarteten Signal verändert hat oder gar nicht mehr vorhanden ist, während das Signal des dem anderen Bremsbelag 4 zugeordneten Transponders 12 mangels Erreichen des zulässigen Verschleißmaßes 8 noch dem erwartetem Signal entspricht. Da jedoch bei passiven Transpondern 12 wie sie bei der Erfindung verwendet werden, die Reichweite relativ gering ist (wenige Millimeter bis zu einigen Zentimetern), ist es ohnehin notwendig, das Lesegerät 14 relativ nahe an dem zu untersuchenden Bremsbelag 4 zu platzieren, um ein Rückkopplungssignal zu erhalten. Somit kann ausgeschlossen werden, dass das Signal des dem einen Bremsbelag 4 zugeordneten Transponders 12 fälschlicherweise dem Transponder 12 des anderen Bremsbelags 4 zugerechnet wird. Alternativ ist es jedoch auch möglich, nur einen der beiden Bremsbeläge 4 mit einem passiven Transponder 12 auszurüsten und bei Erreichen des Verschleißmaßes 8 des betreffenden Bremsbelags 4 dann beide Bremsbeläge 4 präventiv auszuwechseln.

Das Lesegerät 14 wirkt mit einer bevorzugt integrierten Auswerteeinrichtung 16 zusammen, welche eine Information über den momentanen Verschleißzustand des Bremsbelags 4 abhängig von dem von dem jeweiligen passiven Transponder 12 in das Lesegerät 14 rückgekoppelten oder nicht rückgekoppelten Signal generiert. Weiterhin ist eine mit der Auswerteeinrichtung 16 zusammen wirkende, ebenfalls bevorzugt in das Lesegerät 14 integrierte Anzeigeeinrichtung 18 zur Anzeige der Verschleißinformation über den Verschleißzustand des untersuchten Bremsbelags 4 vorgesehen. Diese Verschleißinformation kann beispielsweise optisch durch farbige LED-Leuchten wiedergegeben werden, wobei eine aufleuchtende grüne LED-Leuchte 20 beispielsweise für einen Bremsbelag 4 steht, welcher das zulässige Verschleißmaß 8 noch nicht und eine aufleuchtende rote LED-Leuchte 22 für einen bereits bis zum zulässigen Verschleißmaß 8 verschlissenen Bremsbelag 4 steht. Alternativ oder zusätzlich könnte die Verschleißinformation auch in einem Speicher des Lesegeräts 14 abgelegt und anlässlich einer Wartung des Schienenfahrzeugs ausgelesen werden.

Denkbar ist auch, anstatt nur eines Transponders 12 je Bremsbelag 4 auch mehrere Transponder 12 zu verwenden, welche dann auch in der Ebene des zulässigen Verschleißmaßes 8 verteilt angeordnet sein können. Weiterhin könnten auch mehrere passive Transponder 12 in Verschleißrichtung, d.h. in einer Richtung parallel zu einer Mittelachse 24 der Bremsscheibe 6 hintereinander angeordnet sein und so ausgebildet sein, dass sie jeweils ein anderes charakteristisches Signal aussenden, so dass der momentane Verschleißzustand des betreffenden Bremsbalgs 4 abhängig von den unterschiedlichen, jeweils in das Lesegerät 14 rückgekoppelten Signalen detektiert werden kann, wobei ein Ausfall eines dieser Signale auf den reibungsbedingten Ausfall des zugeordneten passiven Transponders 12 und damit darauf hindeutet, dass ein bestimmtes, dem jeweiligen Platzierungsort dieses passiven Transponders 12 entsprechendes Verschleißmaß erreicht ist, welches dann beispielsweise noch nicht das maximal zulässige Verschleißmaß 8 ist. Die passiven Transponder 12 sind an deren Außenfläche derart angeordnet, dass sie bei Erreichen des zulässigen oder eines anderen Verschleißmaßes 8 in Reibkontakt mit einem mit dieser mitgeführten Element treten.

### Bezugszahlentabelle

- 1: Bremseinrichtung
- 2: Bremsbelagträger
- 4: Bremsbeläge
- 6: Bremsscheibe
- 8: Verschleißmaß
- 10: Vorrichtung
- 12: Transponder
- 14: Lesegerät
- 16: Auswerteeinrichtung
- 18: Anzeigeeinrichtung
- 20: LED grün
- 22: LED rot
- 24: Mittelachse

## Patentansprüche

1. Vorrichtung (10) zur Überwachung der Belagdicke eines Bremsbelags (4) einer Reibungsbremse eines Fahrzeugs, wobei der Bremsbelag (4) mit einer Bremsscheibe (6) zusammenwirkt und mit wenigstens einem passiven Transponder (12) eines RFID-Systems versehen ist, wobei dieser passive Transponder (12) bei Erreichen einer definierten Verschleißgrenze (8) des Bremsbelags (4) derart verändert und/oder zerstört wird, dass er nach Beleuchtung durch ein Lesegerät (14) des RFID-Systems ein gegenüber einem erwarteten Signal verändertes Signal oder kein Signal an das Lesegerät (14) sendet, **dadurch gekennzeichnet, dass** der passive Transponder (12)
a) am Bremsbelag (4) an einer Außenfläche angebracht ist, und
b) bei Erreichen der definierten Verschleißgrenze (8) des Bremsbelags (4) durch Kontakt mit einem von der Bremsscheibe (6) mitgeführten Element verändert und/oder zerstört wird.

2. Vorrichtung nach Anspruch 1, **dadurch gekennzeichnet, dass** das Fahrzeug ein Schienenfahrzeug ist.

3. Vorrichtung nach Anspruch 2, **dadurch gekennzeichnet, dass** das Schienenfahrzeug ein Güterzugwagon ohne eigene Stromversorgung ist.

4. Vorrichtung nach einem der vorhergehenden Ansprüche, **dadurch gekennzeichnet, dass** das Lesegerät (14) mit einer Auswerteeinrichtung (16) zusammenwirkt, welche eine Verschleißinformation über den Verschleißzustand des Bremsbelags (4) abhängig von dem von dem Transponder (12) in das Lesegerät (14) rückgekoppelten oder nicht rückgekoppelten Signals generiert.

5. Vorrichtung nach Anspruch 4, **dadurch gekennzeichnet, dass** ein auslesbarer Speicher vorgesehen ist, zum Speichern und Auslesen der Verschleißinformation über den Verschleißzustand des Bremsbelags (4).

6. Vorrichtung nach Anspruch 4 oder 5, **dadurch gekennzeichnet, dass** weiterhin eine mit der Auswerteeinrichtung (16) zusammen wirkende Anzeigeeinrichtung (18) zur Anzeige der Verschleißinformation über den Bremsbelag (4) vorgesehen ist.

7. Verfahren zur Anwendung der Vorrichtung (10) nach einem der vorhergehenden Ansprüche, beinhaltend:
a) Aktivieren des Lesegeräts (14) in unmittelbarer Nachbarschaft zu dem hinsichtlich seines Verschleißmaßes zu untersuchenden Bremsbelag (4), und
b) Generieren einer Verschleißinformation über den Verschleißzustand des Bremsbelags (4) abhängig von dem von dem passiven Transponder (12) in das Lesegerät (14) rückgekoppelten oder nicht rückgekoppelten Signal durch eine mit dem Lesegerät (14) zusammen wirkende Auswerteeinrichtung (16).

8. Verfahren nach Anspruch 7, **gekennzeichnet durch** Speichern der Verschleißinformation über den Verschleißzustand des mit dem passiven Transponder (12) versehenen Bremsbelags (4) in einem auslesbaren Speicher des Lesegeräts (14).

9. Verfahren nach Anspruch 7 oder 8, **gekennzeichnet durch** Darstellen der Verschleißinformation über den Verschleißzustand des mit dem passiven Transponder (12) versehenen Bremsbelags (4) **durch** eine Anzeigeeinrichtung (18).

## Claims

1. Apparatus (10) for monitoring the lining thickness of a brake lining (4) in a friction brake on a vehicle, wherein the brake lining (4) interacts with a brake disc (6) and is provided with at least one passive transponder (12) in an RFID system, wherein said passive transponder (12) is altered and/or destroyed when a defined wear limit (8) for the brake lining (4) is reached such that, when illuminated by a reader (14) in the RFID system, it sends a signal which is altered in comparison with an expected signal or no signal to the reader (14), **characterized in that** the passive transponder (12)
a) is fitted on an outer face of the brake lining (4), and
b) is altered and/or destroyed through contact with an element carried along by the brake disc (6) when the defined wear limit (8) of the brake lining (4) is reached.

2. Apparatus according to Claim 1, **characterized in that** the vehicle is a rail vehicle.

3. Apparatus according to Claim 2, **characterized in that** the rail vehicle is a freight wagon without a dedicated power supply.

4. Apparatus according to one of the preceding claims, **characterized in that** the reader (14) interacts with an evaluation device (16) which generates a wear information item about the wear state of the brake lining (4) on the basis of the signal fed back or not fed back from the transponder (12) to the reader (14).

5. Apparatus according to Claim 4, **characterized in that** a readable memory is provided, for the purpose of storing and reading the wear information about the wear state of the brake lining (4).

6. Apparatus according to Claim 4 or 5, **characterized in that** an indicator device (18) interacting with the evaluation device (16) is also provided for the purpose of indicating the wear information about the brake lining (4).

7. Method for using the apparatus (10) according to one of the preceding claims, involving:
a) activation of the reader (14) in direct proximity to the brake lining (4) whose amount of wear is to be examined, and
b) generation of a wear information item about the wear state of the brake lining (4) on the basis of the signal fed back or not fed back from the passive transponder (12) to the reader (14) by an evaluation device (16) which interacts with the reader (14).

8. Method according to Claim 7, **characterized by** storage of the wear information about the wear state of the brake lining (4) provided with the passive transponder (12) in a readable memory of the reader (14).

9. Method according to Claim 7 or 8, **characterized by** the presentation of the wear information about the wear state of the brake lining (4) provided with the passive transponder (12) by an indicator device (18).

## Revendications

1. Dispositif (10) de contrôle de l'épaisseur d'une garniture (4) d'un frein à friction d'un véhicule, la garniture (4) du frein coopérant avec un disque (6) de frein et étant pourvue d'au moins un transpondeur (12) passif d'un système RFID, se transpondeur (12) passif étant modifié et/ou détruit lorsqu'une limite (8) d'usure définie de la garniture (4) de frein est atteinte, de manière à ce qu'après l'éclairage par un appareil (14) de lecture du système RFID, un signal modifié par rapport à un signal escompté ou pas de signal est envoyé à l'appareil (12) de lecture, **caractérisé en ce que** le transpondeur (12) passif
a) est mis sur la garniture (4) de frein sur une surface extérieure, et
b) lorsque la limite (8) d'usure définie de la garniture (4) de frein est atteinte, est modifié et/ou détruit par contact avec un élément entraîné par le disque (6) de frein.

2. Dispositif suivant la revendication 1, **caractérisé en ce que** le véhicule est un véhicule ferroviaire.

3. Dispositif suivant la revendication 2, **caractérisé en ce que** le véhicule ferroviaire est un wagon de marchandises sans alimentation en courant électrique propre.

4. Dispositif suivant l'une des revendications précédentes, **caractérisé en ce que** l'appareil (14) de lecture coopère avec un dispositif (16) d'exploitation, qui produit une information sur l'état d'usure de la garniture (4) de frein en fonction du signal rétrocouplé dans l'appareil (14) de lecture par le transpondeur (12) ou non rétrocouplé.

5. Dispositif suivant la revendication 4, **caractérisé en ce qu'**il est prévu une mémoire dans laquelle on peut lire pour mémoriser et lire l'information sur l'état d'usure de la garniture (4) de frein.

6. Dispositif suivant la revendication 4 ou 5, **caractérisé en ce qu'**il est prévu en outre un dispositif (18) d'affichage, coopérant avec le dispositif (16) d'exploitation et destiné à l'affichage de l'information d'usure de la garniture (4) de frein.

7. Procédé d'utilisation d'un dispositif (10) suivant l'une des revendications précédentes, comprenant
a) l'activation de l'appareil (14) de lecture au voisinage immédiat de la garniture (4) de frein à étudier en ce qui concerne son degré d'usure, et
b) la production d'une information sur l'état d'usure de la garniture (4) de frein, en fonction du signal rétrocouplé dans l'appareil (14) de lecture par le transpondeur (12) passif ou non rétrocouplé, par un dispositif (16) d'exploitation coopérant avec l'appareil (14) de lecture.

8. procédé suivant la revendication 7, **caractérisé par** la mémorisation de l'information sur l'état d'usure de la garniture (4) de frein munie du transpondeur (12) passif dans une mémoire de l'appareil (14) de lecture, dans laquelle on peut lire.

9. Procédé suivant la revendication 7 ou 8, **caractérisé par** la représentation par un dispositif (18) d'affichage de l'information sur l'état d'usure de la garniture (4) de frein munie du transpondeur (12) passif.
